# EUROPEAN PATENT APPLICATION

(11) **EP 3 500 049 A1**
(43) Date of publication of application: **19.06.2019**
(21) Application number: 17839021.7
(22) Date of filing: 30.05.2017
(51) Int. Cl.: H04W 76/10

(54) **RELAY DEVICE, MOBILE COMMUNICATION SYSTEM, AND RELAY METHOD**

(30) Priority: 08.08.2016 JP 2016155531
(71) Applicant: Softbank Corp., Tokyo 105-7317 (JP)
(72) Inventor: TAKAGI, Jumpei, Tokyo 105-7317 (JP); NANRI, Masahiko, Tokyo 105-7317 (JP); YOSHIMURA, Takayuki, Tokyo 105-7317 (JP); NOMACHI, Masanori, Tokyo 105-7317 (JP); TAKII, Takanori, Tokyo 105-7317 (JP)
(74) Representative: Würmser, Julian
(86) International application number: PCT/JP2017/020108
(87) International publication number: WO 2018/029946

(57) **Abstract**

A relay apparatus is a relay apparatus that relays communication between a terminal device and macro cell base station in order to implement a relay apparatus capable of preventing a disconnection between the macro cell base station and the relay apparatus, wherein when starting a new connection for radio communication, the relay apparatus acquires identification information for identifying the other end of the radio communication, checks connectability information for defining whether connection to the other end of the radio communication can be established or not against the identification information, and determines whether the connection for the radio communication can be established or not.

## Description

### TECHNICAL FIELD

The present invention relates to a relay apparatus, mobile communications system, and relay method for relaying communication between a terminal device and a macro cell base station.

### BACKGROUND ART

Communication standards concerning mobile communications terminals include the third-generation mobile phone (3G) standards and the LTE (Long Term Evolution) standards. There is provided a mobile communications system that connects a macro cell base station(s) and a mobile communications terminal(s) (terminal device(s)) via radio communication in accordance with these standards. Relay apparatuses are used to improve coverage when the terminal device(s) is used indoors. Regarding the relay apparatuses, there are: an access node(s) in charge of access (AC: Access Link) radio, which is radio communication with the terminal devices; and a relay node(s) in charge of backhaul (BH: Backhaul Link) radio, which is radio communication with the macro cell base station(s). Regarding technology relating such relay apparatuses, for example, there is disclosed a wireless transmission apparatus that is equipped with a function performing radio communication with communications terminals and a function performing radio communication for the backhaul, and also assigns different frequency bands to the respective communication functions (see PTL 1 to PTL 3).

### CITATION LIST

### PATENT LITERATURE

PTL 1: Japanese Patent Application Laid-Open (Kokai) Publication No. 2014-90300
PTL 2: Japanese Patent Application Laid-Open (Kokai) Publication No. 2014-132757
PTL 3: Japanese Patent Application Laid-Open (Kokai) Publication No. 2014-30186

### SUMMARY OF THE INVENTION

### TECHNICAL PROBLEM

Meanwhile, the relay node is a node for performing the backhaul radio communication; and since the relay node transmits radio waves of the same frequency bands as those of the access radio communication, the relay node can be recognized and connected in the same manner as one terminal device as seen from the access node. Therefore, when the relay node is intended to start new backhaul radio communication with the macro cell base station(s), there is a possibility that the relay node may be recognized as one terminal device which exists in a service area for any one of many access nodes. When the relay node is recognized to be the terminal device existing in the service area, the backhaul radio communication with the macro cell base station(s) is disconnected, which results in a problem of interruption of the access radio communication with the terminal device that had been established via the relevant relay node.

The present invention was devised in light of the above-described circumstances and it is an object of the invention to provide a relay apparatus, mobile communications system, and relay method capable of preventing disconnection of the backhaul radio communication with the macro cell base station(s).

### SOLUTION TO PROBLEM

In order to achieve the above-described object, a relay apparatus according to an embodiment is a relay apparatus for relaying communication between a terminal device and a macro cell base station, wherein when starting a new connection for radio communication, the relay apparatus acquires identification information for identifying another end of the radio communication, checks connectability information for defining whether connection to the other end of the radio communication can be established or not against the identification information, and determines whether the connection for the radio communication can be established or not.

Furthermore, a mobile communications system according to an embodiment includes: a relay apparatus that relays communication between a terminal device and a macro cell base station; and a management server that stores connectability information for defining whether connection to another end of radio communication can be established or not at the relay apparatus, wherein when starting a new connection for the radio communication, the relay apparatus acquires identification information for identifying the other end of the radio communication, checks the identification information against the connectability information stored in the management server, and determines whether the connection for the radio communication can be established or not.

Furthermore, a relay method according to an embodiment is a relay method for relaying communication between a terminal device and a macro cell base station, wherein the relay method includes the steps, when starting a new connection for radio communication, of: acquiring identification information for identifying another end of the radio communication: checking connectability information for defining whether connection to the other end of the radio communication can be established or not against the identification information; and determining whether the connection for the radio communication can be established or not according to a result of the checking.

The relay apparatus may acquire the connectability information from a core network.

The connectability information may be information for permitting the connection when the other end of the radio communication is the macro cell base station.

The relay apparatus may be an integrated base station including a relay node unit and an access node unit. Alternatively, the relay apparatus may be a separated base station from which a relay node is separated.

### ADVANTAGEOUS EFFECTS OF THE INVENTION

The relay apparatus, mobile communications system, and relay method according to the present invention can prevent disconnection of the backhaul radio communication as the relay apparatus checks identification information and connectability information concerning the other end of the radio communication when staring a new connection for the radio communication.

### BRIEF DESCRIPTION OF DRAWINGS

Fig. 1 is a schematic diagram illustrating a mobile communications system according to an embodiment of the present invention;
Fig. 2 is a schematic diagram illustrating a mobile communications system according to a variation of the embodiment of the present invention;
Fig. 3 is a sequence diagram for explaining operation according to a first embodiment of the present invention; and
Fig. 4 is a sequence diagram for explaining operation according to a second embodiment of the present invention.

### DESCRIPTION OF EMBODIMENTS

An embodiment of the present invention will be explained with reference to drawings. However, embodiments explained below are just for illustration and are not intended to exclude applications of various variations or technologies which are not clearly specified below. In other words, the present invention can be implemented in various variations (for example, by combining respective examples) within the range not departing from the gist of the invention. Furthermore, in the following descriptions of the drawings, the same or similar reference numerals are assigned to the same or similar parts. The drawings are schematic and are not necessarily identical to, for example, the actual size or proportions. The drawings may sometimes contain parts whose size relationship or proportions differ between the drawings.

### [System Configuration]

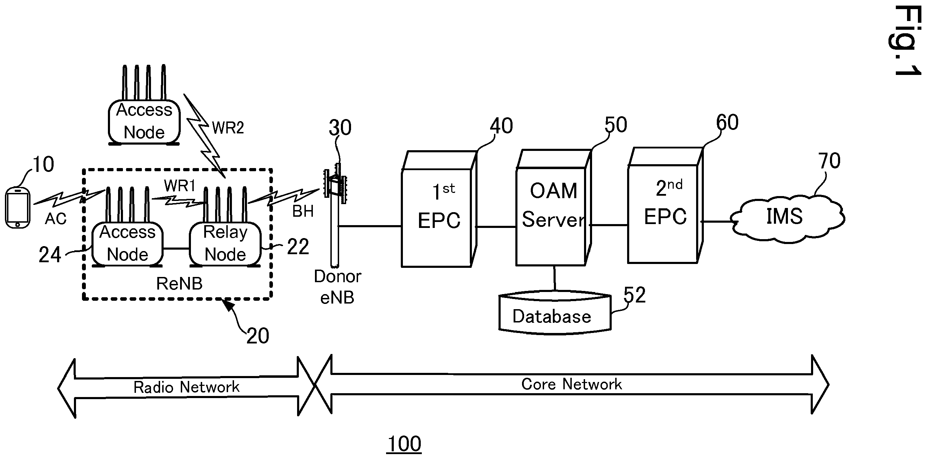

Fig. 1 is a schematic diagram illustrating the configuration of a mobile communications system according to this embodiment. Referring to Fig. 1, a mobile communications system 100 according to this embodiment includes a configuration relating to a radio network and a configuration relating to a core network. They will be explained below.

### (Radio Network)

Referring to Fig. 1, the radio network for the mobile communications system 100 includes a terminal device 10, a relay apparatus 20, and a macro cell base station 30.

The terminal device 10 is a mobile communications terminal such as a smartphone or a cell phone and is also called UE (User Equipment).

The relay apparatus 20 is an apparatus according to the present invention for relaying between the macro cell base station 30 and the terminal device 10 and is also called a ReNB (Regenerative repeater type eNode B). The relay apparatus 20 includes a relay node 22 and an access node 24. In this embodiment, the relay apparatus 20 is configured as an integrated apparatus in which functions of both the relay node 22 and the access node 24 are aggregated.

The relay node 22 constitutes one node in the radio network and is a node that establishes backhaul radio communication with the macro cell base station 30. The relay node 22 is also called customer premises equipment CPE (Customer Premises Equipment). The relay node 22 can establish communication with the macro base station 30 by selecting any one of a plurality of frequency bandwidths which are defined as selectable according to the communications standards.

The access node 24 constitutes one node in the radio network and is a node that establishes access radio communication with the terminal device 10. The access node 24 provides the communications terminal 10 with packet communication services (such as voice packet communication services and multimedia services). The cell size formed by the access node 24 is on a smaller scale than that of the macro base station 30 and constructs a communication area with a radius ranging from several meters to several tens of meters. The access node 24 is also called an HeNB (Home eNode B) or Femtocell (FMC: Femto Cell) base station according to the LTE standards.

The macro base station 30 is configured to establish the radio communication with the relay node 22 and also directly establish the access radio communication with the terminal device 10. The macro base station 30 constructs a communication area with a radius ranging from several hundreds of meters to tens of kilometers. The macro cell base station 30 is also called a donor base station (Donor eNB); and specifically, it is also called an eNB (eNode B) according to the LTE standards.

### (Core Network)

Referring to Fig. 1, the mobile communications system 100 further includes, as a configuration relating to the core network, a first core network EPC (Evolved Packet Core) 40, a management server 50, a second core network EPC 60, and an IP multimedia subsystem IMS (IP Multimedia Subsystem) 70. The management server 50 includes a database 52. Incidentally, in this embodiment, the core network will be explained as including the first core network 40, the management server 50, and the second core network 60; however, the configuration of the core network is not limited to this example.

The first core network EPC 40 is a network that mainly implements switching packet data networks and security functions, mobility management of the terminal device 10, quality management (QoS: Quality of Service) of the radio communication, and so on. The first core network 40 includes, as various devices for implementing these functions, a signaling gateway SGW (Signaling Gateway), a packet data network gateway PGW (Packet Data Network Gateway), a security gateway SeGW (Security Gateway), a mobility management entity MME (Mobility Management Entity), and a quality control server QCS (Quality Control Server) although they are not illustrated in the drawing.

The database 52 stores a non-connectable table as connectability information according to the present invention. The non-connectable table includes, for example, an identification number for the other end of the radio communication, which is prohibited from connection. There is no limitation on the identification number; however, for example, a PCI (Physical Cell ID) or an ECGI (E[ 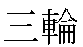 1]-UTRAN Cell Global ID) can be used for identification as a unique ID for the relevant device or base station.

The management server 50 is also called an OAM (Operations, Administration, Maintenance) server and is provided on the femto core network. The management server 50 operates, administers, and maintains the relay apparatus 20 with respect to each registered area. The management server 50 makes reference further to the database 52 in this embodiment.

The second core network EPC 60 is a network for controlling connections of outgoing calls and incoming calls, exchanging information with external networks, exchanging packets, managing accounting, and so on. Although they are not illustrated in the drawing, the second core network 60 includes, as various devices for implementing these functions, a mobile services switching center MSC (Mobile Services Switching Center), a gateway switching node GMSC (Gateway Mobile-services Switching Center), a signaling gateway SGW, a packet data network gateway PGW, a mobility management entity MME, and a communication policy and charging rules management device.

The IP multimedia subsystem IMS 70 is a system for executing communication control via Internet Protocol and is a base system that handles voice calls and multimedia services via VoIP (Voice over Internet Protocol). The IP multimedia subsystem IMS 70 is connected to the Internet.

### [Basic Operation According to The Present Invention]

Next, basic principles of the mobile communications system 100 and the relay apparatus 20 according to this embodiment will be explained with reference to Fig. 1. Referring to Fig. 1, with the relay apparatus 20, the backhaul radio communication is performed between the relay node 22 for the relay apparatus 20 and the macro cell base station 30. Furthermore, the access radio communication is performed between the access node 24 for the relay apparatus 20 and the terminal device 10. The relay apparatus 20 is interposed between the macro cell base station 30 and the terminal device 10 to relay the radio communication so that the efficiency of utilization of the frequency can be enhanced, the service area can be also extended indoors, and user throughput can be improved.

However, there is a possibility that the following inconvenience may occur with such a mobile communications system 100. Specifically speaking, the relay node 22 is originally a device having a function as a repeater that performs the backhaul radio communication with the macro cell base station 30. However, since the relay node 22 has a function capable of sending radio waves of the same frequency bands as those of access radio AC, the relay node 22 has properties that can be recognized and connected as the same properties as those of one terminal device 10 as seen from the access node 24. Therefore, when the relay node 22 is to start new backhaul radio communication with the macro cell base station 30 at the time of, for example, starting or handing over communication, any one of the access nodes 24 may be at risk of misrecognition of the relevant relay node 22 as one terminal device 10.

For example, the relay node 22 can be recognized as the same as one terminal device 10 by the access node 24 to which the relay node 22 preferentially connects by itself as illustrated in Fig. 1, so there is a risk that incorrect radio communication WR1 may be established.

Furthermore, if the relevant relay node 22 is located at a distance where it can exist in the service area from an access node 24 belonging to another relay apparatus 20 as illustrated in Fig. 1, there is a possibility that the relevant relay node 22 may be also misrecognized as one terminal device by the access node 24 for the other relay apparatus 20 and, therefore, there is a risk that incorrect radio communication WR2 may be established.

Then, if the access node 24 misrecognizes the relevant relay node 22 as a terminal device which properly exists in the service area, the access node 24 which made the misrecognition and the relevant relay node 22 will be connected via the radio communication, so that the backhaul radio communication with the macro cell base station will be disconnected. This also results in a problem of interruption of the access radio communication with the terminal device 10 with which communication has been established via the relevant relay node 22. In light of such problems, the present invention solves these problems by using the following two aspects.

### (First Aspect)

When the relay node 22 (the relay apparatus) starts a new connection for the radio communication, it acquires identification information for identifying the other end of the relevant radio communication, checks the identification information against connectability information stored in the management server 50, and determines whether the connection for the radio communication can be established or not.

Specifically speaking, the connectability information is information for permitting a connection when the other end of the radio communication is the macro cell base station. A non-connectable table for exclusively registering IDs of connection prohibited targets can be configured as the identification information. For example, the range of PCI: 498-503 can be set as connection prohibited targets (the other end of the radio communication having the relevant PCI as the identification information is the access node 24). Furthermore, a connection permitted table for exclusively registering IDs of connection permitted targets may be configured as the identification information. For example, the range of PCI: 0-497 can be set as the connection permitted targets (the other end of the radio communication having the relevant PCI as the identification information is the macro cell base station 30). This first aspect will be explained in a first embodiment described later.

### (Second Aspect)

When the relay node 22 (the relay apparatus) starts a new connection for the radio communication, it acquires identification information for identifying the other end of the relevant radio communication, checks the identification information against the connectability information which defines whether a connection with the other end of the radio communication can be established or not, and determines whether the connection for the radio communication can be established or not. The connectability information is the same as for the first aspect.

Incidentally, the relay node 22 (the relay apparatus) acquires the above-mentioned connectability information from the core network. Specifically speaking, the connectability information is data acquired as the relay node 22 inquires at the management server 50 at a specified timing, the management server 50 acquires and transfers the connectability information from the database 52, and the relay node 22 stores the connectability information in an internal memory. The relevant connectability information may be acquired by the relay node 22 at the time of first activation and updated periodically (for example, during nighttime) thereafter or may be acquired via the management server 50 every time the backhaul radio communication is started. This second aspect will be explained in a second embodiment described later.

### [First Embodiment]

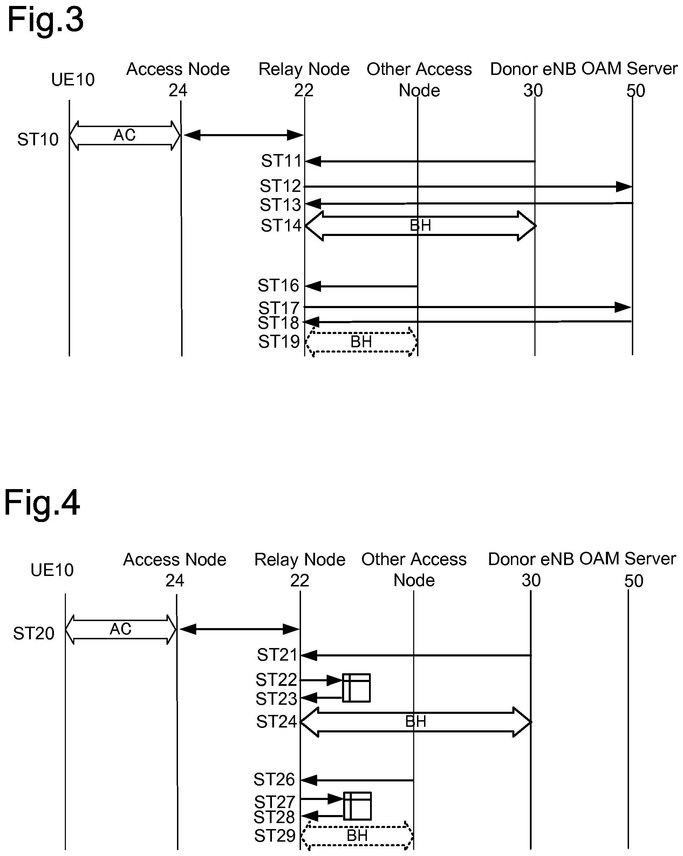

The first embodiment relates to the operation of the aforementioned first aspect of the mobile communications system 100 having the aforementioned configuration. Fig. 3 illustrates a sequence diagram for explaining the operation according to the first embodiment.

Firstly, a case where any one of macro cell base stations 30 exists in the service area will be explained by referring to steps ST10 to ST14.

Let us assume that the access radio communication between the terminal device 10 and the access node 24 for the relay apparatus 20 is established as indicated in step ST10 in Fig. 3.

When new radio communication with the macro cell base station 30 is to be established, the relay node 22 for the relay apparatus 20 acquires the identification information for identifying the other end of the radio communication from the macro cell base station 30 (step ST11). Specifically speaking, the relay node 22 requests the identification information from the macro cell base station 30 which is a communication partner, and acquires the identification information transferred by the macro cell base station 30 in response to the request.

Next, the relay node 22 requests the management server 50 to transfer the connectability information (step ST12). The management server 50 reads the relevant connectability information from the database 52 in response to the connectability information transfer request and transfers the connectability information to the relevant relay node 22 (step ST13).

Then, the relevant relay node 22 checks the identification information acquired from the macro cell base station 30 against the connectability information transferred from the management server 50 and determines whether the connection for the radio communication can be established or not (step ST14). For example, when the connectability information is the non-connectable table, the identification information acquired from the macro cell base station 30 should not be recorded in the relevant non-connectable table. Therefore, when the acquired identification information does not exist in the non-connectable table, the relay node 22 can judge that the communication partner is a connection permitted target. On the other hand, when the connectability information is the connection permitted table, the identification information acquired from the macro cell base station 30 should be recorded in the relevant connection permitted table. Therefore, when the relay node 22 successfully discovers the acquired identification information in the connection permitted table, the relay node 22 can judge that the communication partner is a connection permitted target.

When the relay node 22 successfully judges that the communication partner is the connection permitted target, the relay node 22 determines that the radio communication with the communication partner is possible (step ST14). Specifically speaking, the relay node 22 starts the backhaul radio communication with the relevant macro cell base station 30.

Meanwhile, a case where the access node 24 for the relay apparatus 20 itself or for another relay apparatus 20 exists in the service area will be explained by referring to steps ST16 to ST19.

When an access node 24 exists in the service area in a state where the access radio communication is established between the terminal device 10 and the access node 24 as illustrated in step ST20 in Fig. 3, the relay node 22 acquires the identification information for identifying the other end of the relevant radio communication from the access node 24 (step ST16). Specifically speaking, the relay node 22 requests the identification information from the access node 24 that is a communication partner at the current point in time, and acquires the identification information transferred by the relevant access node 24 in response to the request.

Next, the relay node 22 requests the management server 50 to transfer the connectability information (step ST17). The management server 50 reads the relevant connectability information from the database 52 in response to the connectability information transfer request and transfers the connectability information to the relevant relay node 22 (step ST18).

Then, the relevant relay node 22 checks the identification information acquired from the access node 24 against the connectability information transferred from the management server 50 and determines whether the connection for the radio communication can be established or not (step ST19). For example, when the connectability information is the non-connectable table, the identification information acquired from the access node 24 should be recorded in the relevant non-connectable table. Therefore, when the acquired identification information exists in the non-connectable table, the relay node 22 can judge that the communication partner is a non-connectable target. On the other hand, when the connectability information is the connection permitted table, the identification information acquired from the access node 24 should not be recorded in the relevant connection permitted table. Therefore, when the acquired identification information does not exist in the connection permitted table, the relay node 22 can judge that the communication partner is a non-connectable target.

When the relay node 22 judges that the communication partner is a non-connectable target, the relay node 22 determines that the radio communication with the communication partner is impossible (step ST19). Specifically speaking, the relay node 22 cancels the communication with the relevant access node 22.

According to this first embodiment as described above, the relay node 22 can identify the macro cell base station 30 as an appropriate communication partner by acquiring the identification information of the other end of the radio communication and checking the identification information against the connectability information acquired from the core network side. So, the false connection with an access node 24 will no longer be made and disconnection of the backhaul radio communication can be avoided.

### [Second Embodiment]

A second embodiment relates to the operation of the aforementioned second aspect of the mobile communications system 100 having the aforementioned configuration. Fig. 4 illustrates a sequence diagram for explaining the operation according to the second embodiment.

Firstly, a case where any one of macro cell base stations 30 exists in the service area will be explained by referring to steps ST20 to ST24.

Let us assume that the access radio communication between the terminal device 10 and the access node 24 for the relay apparatus 20 is established as indicated in step ST20 in Fig. 4.

When new radio communication with the macro cell base station 30 is to be established, the relay node 22 for the relay apparatus 20 acquires the identification information for identifying the other end of the radio communication from the macro cell base station 30 (step ST21). Specifically speaking, the relay node 22 requests the identification information from the macro cell base station 30 that is a communication partner, and acquires the identification information transferred by the macro cell base station 30 in response to the request.

Next, the relay node 22 refers to the connectability information stored in the internal memory (step ST22). Then, the relevant relay node 22 checks the identification information acquired from the macro cell base station 30 against the connectability information stored in the internal memory and determines whether the connection for the radio communication can be established or not (step ST23). Specifically speaking, it can be judged that the macro cell base station 30 that is the communication partner is the connection permitted target, so the relay node 22 starts the backhaul radio communication with the relevant macro cell base station 30 (step ST24).

Meanwhile, a case where the access node 24 for the relay apparatus 20 itself or for another relay apparatus 20 exists in the service area will be explained by referring to steps ST26 to ST29.

When an access node 24 exists in the service area in a state where the access radio communication is established between the terminal device 10 and the access node 24 as illustrated in step ST26 in Fig. 3, the relay node 22 acquires the identification information for identifying the other end of the relevant radio communication from the access node 24 (step ST26). Specifically speaking, the relay node 22 requests the identification information from the access node 24 that is a communication partner at the current point in time, and acquires the identification information transferred by the relevant access node 24 in response to the request.

Next, the relay node 22 refers to the connectability information stored in the internal memory (step ST27). Then, the relevant relay node 22 checks the identification information acquired from the access node 24 against the connectability information stored in the internal memory and determines whether the connection for the radio communication can be established or not (step ST28). Specifically speaking, it can be determined that the radio communication with the access node 24 that is the communication partner at the current point in time is impossible, so the relay node 22 cancels the communication with the relevant access node 22 (step ST29).

Incidentally, the relay node 22 should preferably acquire the connectability information from the management server 50 at the time of first activation and update the connectability information to the latest connectability information periodically (for example, during nighttime) thereafter.

According to this second embodiment as described above, the relay node 22 can identify the macro cell base station 30 as an appropriate communication partner by acquiring the identification information of the other end of the radio communication and checking the identification information against the connectability information stored in the internal memory. So, the false connection to an access node 24 will no longer be made and disconnection of the backhaul radio communication can be avoided.

### [Other Embodiments]

The present invention has been described by referring to the embodiments as described above; however, it should not be understood that the descriptions and diagrams which constitute part of this disclosure limit this invention. This disclosure should make various substitute embodiments, examples, and operation technologies apparent to those skilled in the art.

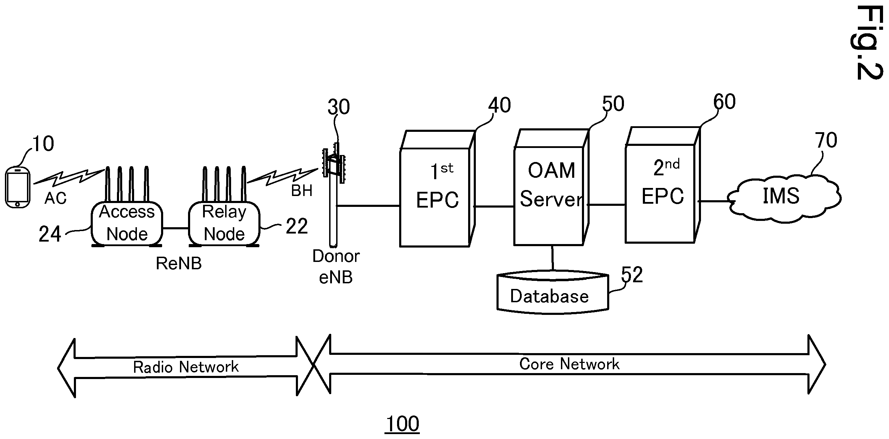

For example, in the above-mentioned embodiments, the integrated-type relay apparatus 20 in which the relay node 22 and the access node 24 are integrated with each other is described; however, the invention is not limited to this example. For example, the relay node 22 may be separated from the access node 24 as illustrated in Fig. 2. The relay node and the access node should preferably be connected via high-speed wiring such as optical communications by means of optical fibers. Furthermore, when a separated-type relay apparatus is configured as the relay apparatus, it is possible to configure it by connecting a plurality of access nodes to one relay node.

### REFERENCE SIGNS LIST

- 10: terminal device
- 20: relay apparatus
- 22: relay node
- 24: access node
- 30: macro cell base station
- 40: first core network
- 50: management server (OAM server)
- 52: database
- 60: second core network
- 70: IP multimedia subsystem IMS
- 100: mobile communications system

## Claims

1. A relay apparatus for relaying communication between a terminal device and a macro cell base station,
wherein when starting a new connection for radio communication, the relay apparatus acquires identification information for identifying another end of the radio communication, checks connectability information for defining whether connection to the other end of the radio communication can be established or not against the identification information, and determines whether the connection for the radio communication can be established or not.

2. The relay apparatus according to claim 1,
wherein the relay apparatus acquires the connectability information from a core network.

3. The relay apparatus according to claim 1,
wherein the connectability information is information for permitting the connection when the other end of the radio communication is the macro cell base station.

4. The relay apparatus according to claim 1,
wherein the relay apparatus is an integrated base station including a relay node unit and an access node unit.

5. The relay apparatus according to claim 1,
wherein the relay apparatus is a separated base station from which a relay node is separated.

6. A mobile communications system comprising:
a relay apparatus that relays communication between a terminal device and a macro cell base station; and
a management server that stores connectability information for defining whether connection to another end of radio communication can be established or not at the relay apparatus,
wherein when starting a new connection for the radio communication, the relay apparatus acquires identification information for identifying the other end of the radio communication, checks the identification information against the connectability information stored in the management server, and determines whether the connection for the radio communication can be established or not.

7. The mobile communications system according to claim 6, wherein the connectability information is information for permitting the connection when the other end of the radio communication is the macro cell base station.

8. A relay method for relaying communication between a terminal device and a macro cell base station,
the relay method comprising the steps, when starting a new connection for radio communication, of:
acquiring identification information for identifying another end of the radio communication:
checking connectability information for defining whether connection to the other end of the radio communication can be established or not against the identification information; and
determining whether the connection for the radio communication can be established or not according to a result of the checking.

9. The relay method according to claim 8,
wherein the connectability information is information for identifying the macro cell base station for which the connection is permitted when the other end of the radio communication is the macro cell base station; and
wherein the relay method further comprises a step of acquiring the connectability information.
